(19) Europäisches Patentamt
European Patent Office
Office européen des brevets

(11) Veröffentlichungsnummer: **0 444 294 A1**

(12) # EUROPÄISCHE PATENTANMELDUNG

(21) Anmeldenummer: **90124854.2**

(22) Anmeldetag: **20.12.90**

(51) Int. Cl.5: **C08K 5/00**, C08L 51/00, C09D 11/16

(30) Priorität: **01.03.90 DE 4006396**

(43) Veröffentlichungstag der Anmeldung: **04.09.91 Patentblatt 91/36**

(84) Benannte Vertragsstaaten: **CH DE FR GB LI**

(71) Anmelder: **BAYER AG**

**W-5090 Leverkusen 1 Bayerwerk(DE)**

(72) Erfinder: **Eichenauer, Herbert, Dr.**
**Gustav-Heinemann-strasse 3**
**W-4047 Dormagen 1(DE)**
Erfinder: **Haus, Artur, Dr.**
**Zum Eschental 8**
**W-5063 Overath(DE)**

(54) **Fluoreszierend eingefärbte Polymeremulsionen.**

(57) Wäßrige Emulsionen auf Basis bestimmter Propfpolymerisate eignen sich hervorragend zur Herstellung von Farbtinten für sogenannte Markerstifte. Sie zeichnen sich beispielsweise durch eine hohe Lagerstabilität aus.

EP 0 444 294 A1

Fluoreszierend eingefärbte Polymeremulsionen stellen wertvolle Ausgangsmaterialien dar und finden im großen Umfang Verwendung als Färbemittel für verschiedenartige Substrate wie z.B. Holz, Kunststoff, Glas, Metall, vorzugsweise jedoch Papiere, die mit einer Flureszenzfarbe beschrieben, bedruckt oder anderweitig gekennzeichnet werden sollen.

Dabei ist wichtig, daß die eingefärbten Polymeremulsionen den Farbstoff in so hohen Konzentrationen enthalten, daß schon bei einmaligem Anfärbevorgang eine ausreichende Farbgebung gelingt. Gleichzeitig muß dabei jedoch die Stabilität der Polymeremulsion so hoch sein, daß auch bei längerer Lagerung kein Farbstoff sedimentiert und die Fluoreszenz der Polymeremulsion im Laufe der Zeit keinen Veränderungen unterworfen ist. Weiterhin müssen die gefärbten Polymeremulsionen ausgezeichnete Filmbildungseigenschaften, insbesondere bei Raumtemperatur, aufweisen (vgl. z.B. DE-OS-3524197), ohne jedoch beim Einsatz in Markerstiften zu einem Verkleben der Markerspitzen zu führen.

Es wurde nun gefunden, daß diese Eigenschaften in besonders hohem Maße dann erreicht werden, wenn das als disperse Phase der Emulsion fungierende Polymerisat ein Pfropfpolymerisat ist.

Gegenstand der vorliegenden Erfindung sind somit fluoreszierend eingefärbte Polymeremulsionen enthaltend in der wäßrigen Phase dispergiert und/oder gelöst

A) mindestens ein Pfropfpolymerisat,

B) mindestens einen fluoreszierenden Farbstoff und gegebenenfalls

C) mindestens ein mit Wasser mischbares organisches Lösungsmittel.

Ein weiterer Gegenstand der Erfindung ist ein Verfahren zur Herstellung dieser fluoreszierend eingefärbten Polymeremulsionen, wonach zu mindestens einem in wäßriger Emulsion vorliegenden Pfropfpolymerisat A unter ständigem Rühren bei Temperaturen zwischen 20°C und 100°C, vorzugsweise zwischen 50° C und 100° C, mindestens ein fluoreszierender Farbstoff B) und gegebenenfalls mindestens ein mit Wasser mischbares organisches Lösungsmittel C) zugesetzt wird, bis die Emulsion einheitlich gefärbt ist.

Bevorzugte Pfropfpolymerisate A sind Reaktionsprodukte von ethylenisch ungesättigten Monomeren, die zur Herstellung von Homopolymerisaten mit Glasübergangstemperaturen von mindestens 30° C befähigt sind und als pfropfende Monomere zur Herstellung der Pfropfauflage dienen, und einem kautschukartigen Polymerisat mit einer Glasübergangstemperatur von höchstens 10° C, vorzugsweise höchstens 0° C, Bevorzugte Pfropfpolymerisate A umfassen solche Pfropfpolymerisate, die im wesentlichen aus mindestens 2 der folgenden Monomeren erhältlich sind: Chloropren, Butadien-1,3, Isopren, Styrol, Acrylnitril, Ethylen, Propylen, Vinylacetat und (Meth)-Acrylsäureester mit 1 bis 18 C-Atomen in der Alkoholkomponente; also Polymerisate, wie sie z.B. in "Methoden der Organischen Chemie" (Houben-Weyl), Bd. 14/1, Georg Thieme Verlag, Stuttgart 1961, S. 393-406 und in C.B. Bucknall, "Toughened Plastics", Appl. Science Publishers, London 1977, beschrieben sind.

Bei der Herstellung der Pfropfpolymerisate A durch Pfropfcopolymerisation, die üblicherweise in Gegenwart von Radikalstartern, z.B. wasserlöslichen Initiatoren, Emulgatoren oder Komplexbildnern/Pfropfaktivatoren sowie Reglern durchgeführt wird, bilden sich im allgemeinen neben dem eigentlichen Pfropfcopolymerisat in bestimmtem Ausmaß auch freie Homo- bzw. Copolymerisate der die Pfropfhülle bildenden Pfropfmonomeren. Pfropfpolymerisate A im Sinne der Erfindung sind deshalb durch Polymerisation von Pfropfmonomeren in Gegenwart des Kautschuklatex erhaltene Produkte, genau genommen also im allgemeinen ein Gemisch aus Pfropfcopolymerisat und freiem (Co)polymerisat der Pfropfmonomeren.

Vorzugsweise übersteigt die Menge an freiem (Co-)Polymerisat 15 Gew.-%, vorzugsweise 10 Gew.-%, insbesondere 7 Gew.-%, bezogen auf Komponente A, nicht. Der Staudinger-Index dieser freien (Co)-polymerisate soll weniger als 0,6 dl/g, vorzugsweise weniger als 0,4 dl/g betragen, gemessen im Dimethylformamid bei 25° C.

Bevorzugte Pfropfgrundlagen für die Herstellung der Pfropfpolymerisate A umfassen Dien- und Acrylatkautschuke, ferner auch Ethylen/Propylen-Copolymerisate, EPDM-Kautschuke (= Ethylen/Propylen/Dien-Copolymerisate) und Siliconkautschuke. Die Pfropfgrundlagen sind vorzugsweise mindestens teilvernetzt.

Bevorzugte Dienkautschuke sind vernetzte Homo- und/oder Copolymerisate aus konjugierten $C_4$-$C_6$-Dienen. Bevorzugte Diene sind Butadien-1,3 und Isopren. Die Diencopolymerisate können neben den Dienresten bis zu 30 Gew.-%, bezogen auf Diencopolymerisat, Reste anderer ethylenisch ungesättigter Monomerer, wie z.B. Styrol, Acrylnitril, Ester der Acryl- oder Methacrylsäure mit einwertigen $C_1$-$C_4$-Alkoholen, wie z.B. Methylacrylat, Ethylacrylat, Methylmethacrylat, Ethylmethacrylat, enthalten.

Die bevorzugte Pfropfgrundlage ist Polybutadien.

Die Herstellung der Dienkautschuk-Pfropfgrundlage und der daraus hergestellten Pfropfpolymerisate wird z.B. in "Methoden der Organischen Chemie" (Houben-Weyl), Bd. 14/1, Georg Thieme Verlag, Stuttgart 1961, S. 393-406, sowie in Ullmanns Encyclopädie der technischen Chemie, 4. Auflage, Bd. 19, Verlag Chemie, Weinheim, 1981, S. 279 bis 284, beschrieben.

Der Gelgehalt der als Pfropfgrundlage verwendeten Dienkautschuke liegt vorzugsweise über 50, insbesondere über 70 Gew.-%, bestimmt in Toluol bei 25° C (vgl. M. Hoffmann, H. Krömer, R. Kuhn, Polymeranalytik I und II, Georg Thieme Verlag, Stuttgart 1977).

Bevorzugte Pfropfgrundlagen auf Basis Acrylatkautschuk sind Polymerisate, die durch Polymerisation von $C_1$-$C_8$-Alkylacrylaten erhalten werden. Die Polymerisate können auch Copolymerisate der Acrylsäureester mit bis zu 40 Gew.-%, bezogen auf Copolymerisat, anderer Vinylmonomerer, wie Styrol, Acrylnitril, Methylmethacrylat, Vinylester, Vinylether, sein.

Der Gelgehalt der als Pfropfgrundlage verwendeten Acrylatkautschuke liegt vorzugsweise über 40, insbesondere über 60 Gew.-%, bestimmt in Dimethylformamid bei 25° C (vgl. M. Hoffmann, H. Krömer, R. Kuhn, loc. cit.).

Die mindestens teilweise Vernetzung der Pfropfgrundlagen kann durch die Mitverwendung vernetzender Monomerer bei der Herstellung der Pfropfgrundlagen erfolgen. Als vernetzende Monomere eignen sich Verbindungen mit mindestens 2 ethylenisch ungesättigten copolymerisierbaren Doppelbindungen.

Bevorzugte Beispiele für vernetzende Monomere mit mehr als einer copolymerisierbaren Doppelbindung sind Ester ungesättigter $C_3$-$C_{12}$-Monocarbonsäuren und ungesättigter einwertiger $C_2$-$C_{12}$-Alkohole oder gesättigter $C_2$-$C_{20}$-Polyole mit 2 bis 4 OH-Gruppen, wie z.B. mehrfach ungesättigte heterocyclische Verbindungen, wie Trivinyl-, Triallylcyanurat und -isocyanurat; insbesondere Triallylcyanurat; polyfunktionelle Vinylverbindungen, wie Di- und Trivinylbenzole; aber auch Triallylphosphat.

Bevorzugte vernetzende Monomere sind Allylmethacrylat, Ethylenglykoldimethacrylat, Diallylphthalat und heterocyclische Verbindungen, die mindestens drei copolymerisierbare ethylenisch ungesättigte Doppelbindungen aufweisen.

Besonders bevorzugte vernetzende Monomere sind die cyclischen Monomeren Triallylcyanurat, Triallylisocyanurat, Trivinylcyanurat, Trisacryloylhexahydro-s-triazin, Triallylbenzole.

Die Menge der vernetzenden Monomeren beträgt vorzugsweise 0,02 bis 5, insbesondere 0,05 bis 2 Gew.-%, bezogen auf Kautschuk-Pfropfgrundlage.

Bei cyclischen, vernetzenden Monomeren mit mindestens drei ethylenisch ungesättigten Doppelbindungen ist es vorteilhaft, nicht mehr als 1 Gew.-%, bezogen auf Kautschuk-Pfropfgrundlage, zu verwenden.

Bevorzugte copolymerisierbare pfropfende Monomere, die mit der Pfropfgrundlage zum Pfropfpolymerisat reagieren können, umfassen beispielsweise Styrol, α-Methylstyrol, kernsubstituiertes Styrol, Methylmethacrylat, Acrylnitril, Methacrylnitril, N-substituiertes Maleinimid, Vinylacetat, Acrylsäure, Methacrylsäure, Hydroxyethylacrylat, Hydroxyethylmethacrylat, Glycidylmethacrylat, Dimethylaminoethylacrylat, Dimethylaminoethylmethacrylat und Mischungen daraus.

Bevorzugte Pfropfpolymerisate A sind Reaktionsprodukte von 40 bis 99, vorzugsweise 65 bis 97,5, insbesondere 75 bis 95 Gew.-% Pfropfmonomer auf 1 bis 60, vorzugsweise 2,5 bis 35, insbesondere 5 bis 25 Gew.-% Pfropfgrundlage, jeweils bezogen auf Pfropfkautschuk A.

Besonders bevorzugte Pfropfpolymerisate A sind Reaktionsprodukte von

A1) 10-200 Gew.-Teilen, vorzugsweise 50-150 Gew.-Teilen, Styrol, α-Methylstyrol, durch Cl oder $C_1$-$C_4$-Alkyl kernsubstituiertem Styrol, Methylmethacrylat, Acrylnitril, Methacrylnitril, N-$C_1$-$C_4$-Alkyl- oder N-Phenyl-substituiertem Maleinimid, Vinylacetat oder Mischungen daraus und/oder

A2) 1-20 Gew.-Teilen, vorzugsweise 2,5-15 Gew.-Teilen, Acrylsäure, Methacrylsäure, Hydroxyethylacrylat, Hydroxyethylmethacrylat, Glycidylmethacrylat, Dimethylaminoethylacrylat, Dimethylaminoethylmethacrylat oder Mischungen daraus auf

A3) 1-50 Gew.-Teile, vorzugsweise 5-25 Gew.-Teile, einer Pfropfgrundlage mit einer Glastemperatur ≦ 10° C, vorzugsweise ≦ 0° C.

Als Monomerkomponente A1) werden vorzugsweise Methylmethacrylat, Styrol oder Mischungen aus Styrol und Acrylnitril, vorzugsweise im Gew.-Verhältnis 90:10-70:30, eingesetzt, bevorzugte Monomerkomponente A2) ist Acrylsäure und/oder Methacrylsäure; die resultierenden Propfpolymerisate weisen Glasübergangstemperaturen ≧ 30° C, vorzugsweise ≧ 50° C auf.

Die Pfropfpolymerisate A können durch radikalische Emulsionspfropfreaktion der Pfropfmonomeren in Gegenwart der in Latexform vorliegenden Pfropfgrundlage bei Temperaturen zwischen 25 und 160, vorzugsweise 40 und 90° C hergestellt werden.

Bevorzugte gepfropfte Dienkautschuke sind z.B. in der DE-PS 2 348 377 und in den DE-OS 2 927 576, 3 025 605, bevorzugte gepfropfte Acrylatkautschuke z.B. in der DE-PS 2 444 584 und in den DE-OS 2 726 256, 3 039 114, 3 039 115, 3 117 052 beschrieben.

Bevorzugte Pfropfpolymerisate A besitzen mittlere Teilchendurchmesser $d_{50}$ von 0,05 bis 2, vorzugsweise von 0,08 bis 1,5, insbesondere von 0,1 bis 0,8 µm.

Der mittlere Teilchendurchmesser $d_{50}$ ist der Durchmesser, oberhalb und unterhalb dessen jeweils 50 Gew.-% der Teilchen liegen. Er kann bestimmt werden mittels Ultrazentrifugen-Messungen (W. Scholtan, H.

Lange, Kolloid. Z. und Z. Polymere 250 (1972), 782-796) oder mittels Elektronenmikroskopie und anschließender Teilchenauszählung (G. Kämpf, H. Schuster, Angew. Makromolekulare Chemie 14, (1970), 111-129) oder mittels Lichtstreuungsmessungen.

Bei der Pfropfpolymerisation können übliche Emulgatoren wie z.B. Alkylsulfate, Alkylsulfonate, Seifen gesättigter oder ungesättigter Fettsäuren sowie alkalischer disproportionierter oder hydrierter Abietin- oder Tallölsäuren verwendet werden.

Zusätzlich hierzu können nichtionische Emulgatoren wie z.B. polyethoxylierte oder polypropoxylierte Alkohole, z.B. polyethoxyliertes Nonylphenol oder polyethoxylierter Oleylalkohol, eingesetzt werden; auch polyethoxylierte Carbonsäuren wie z.B. Polyetherester aus Ölsäure oder Abietinsäure und Ethylenoxid sind gut geeignet.

Als Initiatoren kommen anorganische und organische Peroxide, z.B. $H_2O_2$, Di-tert.-butylperoxid, Cumolhydroperoxid, Dicyclohexylpercarbonat, p-Menthanhydroperoxid, Azoinitiatoren wie z.B. Azobisisobutyronitril, anorganische Persalze wie Kaliumpersulfat, Ammoniumpersulfat,

Kaliumperphosphat, Natriumperborat sowie Redox-Systeme in Betracht, die sich aus einem - in der Regel organischen - Oxidationsmittel und einem Reduktionsmittel zusammensetzen, wobei im Reaktionsmedium zusätzlich Schwermetallionen vorhanden sind (siehe H. Logemann in Houben-Weyl, Methoden der organischen Chemie, Bd. 14/1, S. 263-297).

Die Durchführung der Pfropfpolymerisation erfolgt vorzugsweise unter portionsweiser oder kontinuierlicher Zugabe der Monomeren zur in Latexform vorliegenden Kautschukkomponente, sie kann jedoch auch nach der sogenannten "Batch-Methode" unter Zusammengeben aller Reaktionskomponenten durchgeführt werden.

Als erfindungsgemäß einzusetzende fluoreszierende Farbstoffe B) kommen Verbindungen der verschiedensten Substanzklassen, wie z.B. solche der Azo-, Methin-, Triphenylmethan-, Cumarin-, Anthrachinon-, Phthalocyanin- und Perylentetracarbonsäure-diimidreihe in Betracht.

Die Farbstoffe bzw. Aufheller können anionisch, kationisch oder vorzugsweise nichtionisch sein.

Besonders bevorzugt sind 3-Benzoxazolyl-7-amino-cumarine gemäß DOS 2 030 507 sowie Aryloxystyrylfarbstoffe gemäß DE-OS 2 316 766.

Geeignet sind weiterhin 3-Benzimidazolium-7-amino-cumarine gemäß DOS 1 098 125, Anthrapyrimidine gemäß DOS 3 001 188 und EP-A-32 373, Benzanthrone gemäß DOS 2 617 322, Benzoxanthene gemäß DOS 2 922 374 sowie 4-Cyanocumarine gemäß US-A-4 547 579 und DOS 2 925 546.

Ganz besonders geeignet sind die Farbstoffe der Formeln

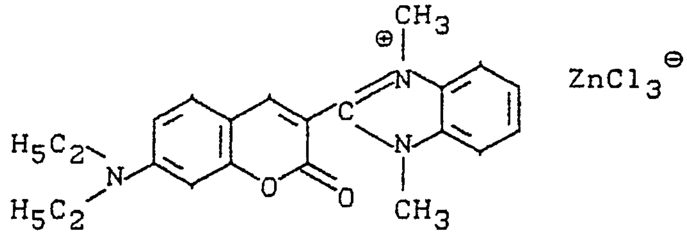

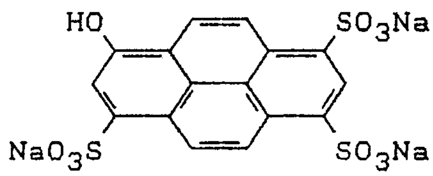

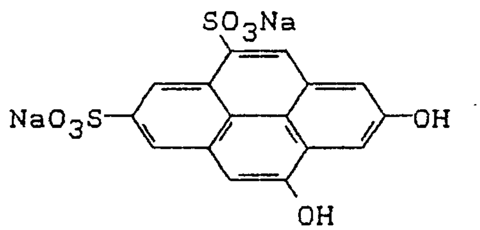

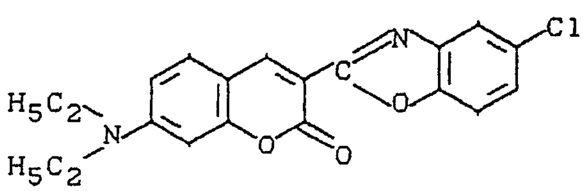

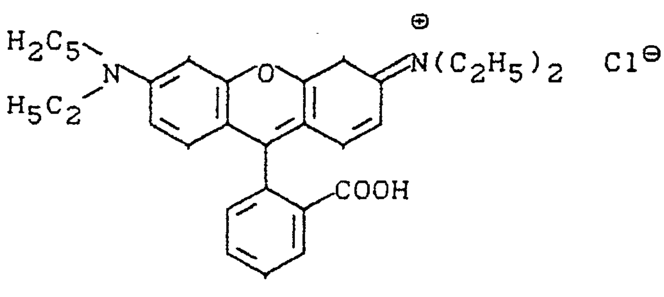

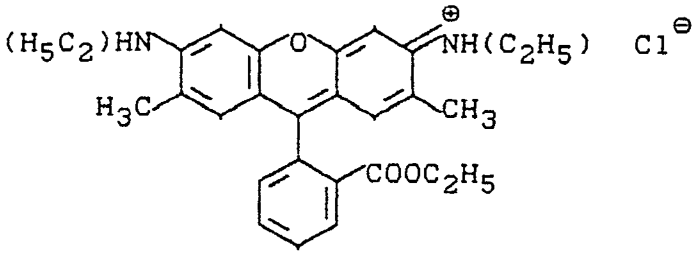

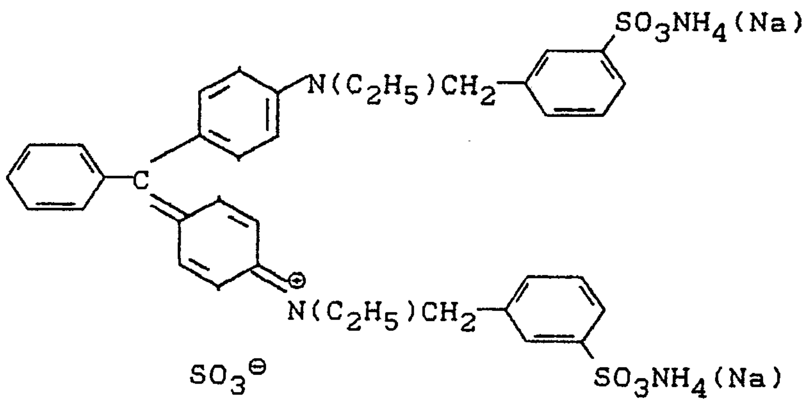

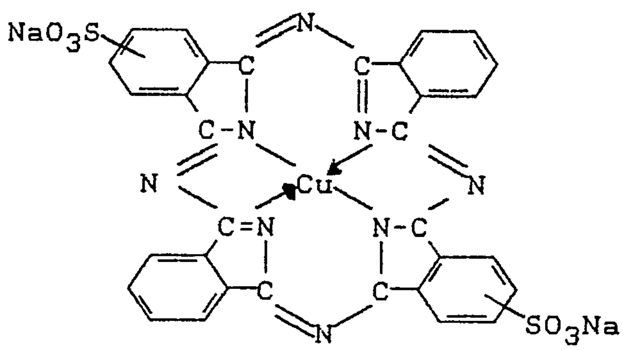

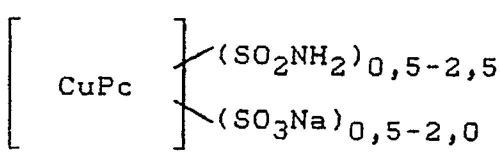

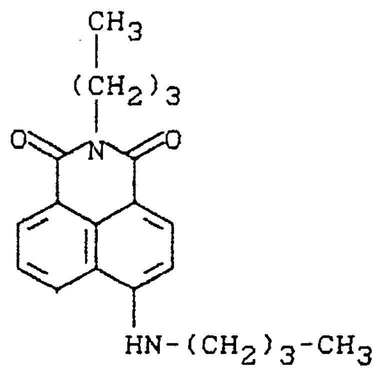

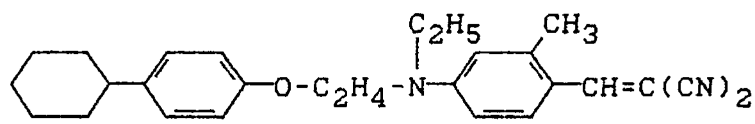

Zwecks Nuancierung können auch Farbstoffgemische eingesetzt werden. Prinzipiell ist auch der Zusatz spezieller Pigmente möglich.

Gegebenenfalls einzusetzende mit Wasser mischbare organische Lösungsmittel C) sind z.B. Ethylenglykol, Propylenglykol, Diethylenglykol, Butandiol, Glycerin, Polyglykole, Ethoxypropanol.

Das Anfärben der Polymeremulsion kann z.B. durch Zugabe einer wäßrigen Lösung des Farbstoffes B) oder einer Kombination aus Wasser, mit Wasser mischbarem organischen Lösungsmittel C) und Farbstoff B) zur Polymeremulsion A) erfolgen. Prinzipiell ist die Anfärbung auch möglich, indem der Farbstoff B) im Emulsionspolymerisationssystem zur Herstellung des Pfropfpolymerisats A) zugegen ist.

Vorzugsweise erfolgt die Herstellung der fluoreszierend eingefärbten Polymeremulsionen so, daß zum in Emulsionsform vorliegenden Pfropfpolymerisat A) unter ständigem Rühren bei Temperaturen zwischen 20° C und 100° C ein fluoreszierender Farbstoff B) und gegebenenfalls ein mit Wasser mischbares organisches Lösungsmittel C) zugesetzt werden und der Rührvorgang so lange weitergeführt wird, bis die Emulsion einheitlich eingefärbt ist.

Die Feststoffgehalte der erfindungsgemäßen fluoreszierend eingefärbten Polymeremulsionen sind in weiten Grenzen variierbar und können den jeweiligen Anforderungen angepaßt werden, im allgemeinen liegen sie zwischen 2 und 60 Gew.-%, vorzugsweise zwischen 5 und 50 Gew.-%.

Die erfindungsgemäßen fluoreszierend eingefärbten Polymeremulsionen können direkt zum Anfärben verwendet werden, sie können jedoch auch verwendet werden, nachdem für wäßrige Farben übliche Zusätze (z.B. zur Einstellung der Viskosität, der Trocknungseigenschaften oder zum Schutz gegen Bakterien- oder Pilzbefall) zugesetzt worden sind, Auch ist prinzipiell der Zusatz von Antioxidantien, z.B. von sterisch gehinderten Phenolen (z.B. 2,6-Di-tert.-butyl-p-kresol, Octadecyl-3-(3,5-di-tert.-butyl-4-hydroxyphenyl)propionat) möglich.

Bevorzugtes Einsatzgebiet für die erfindungsgemäß fluoreszierend eingefärbten Polymeremulsionen ist die Verwendung als Grundlage für die Herstellung von Markertinten.

## Beispiel 1

### Herstellung eines Pfropfpolymerisats A)

In einem Reaktor werden 10 Gew.-Teile eines Polybutadiens (in Form eines wäßrigen Latex mit einem Feststoffgehalt von 7,6 Gew.-%) mit einem mittleren Teilchendurchmesser ($d_{50}$) von 0,1 $\mu$m auf 65° C erwärmt, wonach 0,5 Gew.-Teile Kaliumpersulfat (gelöst in 10 Gew.-Teilen Wasser) zugegeben werden. Anschließend werden 8 Gew.-Teile Natriumsalz von $C_{9-18}$-Alkylsulfonsäuren (z.B. Mersolat® K 30 der Bayer AG) zugesetzt, wonach innerhalb 4 Stunden 90 Gew.-Teile eines Monomerengemisches aus 70 Gew.-% Styrol, 24,4 Gew.-% Acrylnitril und 5,6 Gew.-% Methacrylsäure zudosiert werden, wobei die Pfropfreaktion erfolgt. Nach einer Nachreaktionszeit von weiteren 4 Stunden bei 65° C ist die Pfropfreaktion abgeschlossen. Es resultiert ein Pfropfpolymerisat mit einem Polymerfeststoffgehalt von 41,6 Gew.-%.

## Beispiel 2

Herstellung eines Pfropfpolymerisats A)

In einem Reaktor werden 7,5 Gew.-Teile eines Polybutadiens (in Form eines wäßrigen Latex mit einem Feststoffgehalt von 7,6 Gew.-%) mit einem mittleren Teilchendurchmesser ($d_{50}$) von 0,12 $\mu$m auf 65° C erwärmt, wonach 0,5 Gew.-Teile Ammoniumpersulfat (gelöst in 20 Gew.-Teilen Wasser) zugegeben werden. Nach Zusatz einer Mischung aus 8 Gew.-Teilen Natriumsalz von $C_{9-18}$-Alkylsulfonsäuren (Mersolat K 30 der Bayer AG) und 2 Gew.-Teilen des Natriumsalzes von n-Dodecylbenzolsulfonsäure (Marlon A 375 der Chemischen Werke Hüls) werden 92,5 Gew.-Teile eines Monomerengemisches aus 45,95 Gew.-% Styrol, 45,95 Gew.-% Methylmethacrylat und 8,1 Gew.-% Acrylsäure innerhalb 4 Stunden zudosiert, wobei die Pfropfreaktion erfolgt. Nach einer Nachreaktionszeit von weiteren 4 Stunden bei 65° C ist die Pfropfreaktion beendet. Es resultiert ein Pfropfpolymerlatex mit einem Polymerfeststoffgehalt von 45,0 Gew.-%.

Beispiel 3 (Vergleich)

Die in Versuch 1 beschriebene Polymerisation wird wiederholt, wobei die Polybutadienlatexmenge durch Wasser ersetzt wird. Es resultiert ein Latex mit einem Polymerfeststoffgehalt von 37,3 Gew.-%.

Beispiel 4

Herstellung einer fluoreszierenden Polymeremulsion

150 Gew.-Teile des Pfropfpolymerlatex aus Beispiel 1 werden mit 100 Gew.-Teilen Wasser versetzt und gemischt, wonach ein Latex mit einem Polymerfeststoffgehalt von ca. 25 Gew.-% resultiert. Zu diesem Latex wird unter Rühren eine Mischung aus 30 Gew.-Teilen Wasser, 50 Gew.-Teilen Ethylenglykol, 1,35 Gew.-Teilen des gelben Fluoreszenzfarbstoffs der Formel

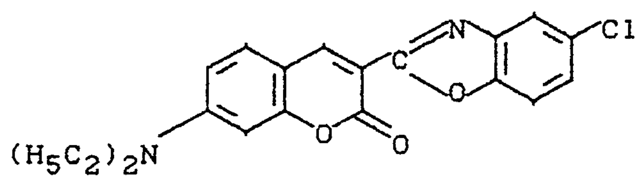

(Macrolex® Fluoreszenzgelb 10 GN der Bayer AG),
0,5 Gew.-Teilen eines nichtionischen Emulgators vom Typ eines mit 10 Mol EO umgesetzten Nonylphenols und 1,5 Gew.-Teilen Natriumsalz von $C_{9-18}$-Alkylsulfonsäuren gegeben, auf 90-95° C erwärmt und 4 Stunden lang bei dieser Temperatur gerührt.

Beispiel 5

Herstellung einer fluoreszierenden Polymeremulsion

130 Gew.-Teile des Pfropfpolymerlatex aus Beispiel 2 werden mit 100 Gew.-Teilen Wasser verdünnt, wonach ein Latex mit einem Polymerfeststoffgehalt von ca. 25 Gew.-% erhalten wird. Zu diesem Latex wird unter Rühren eine Mischung aus 20 Gew.-Teilen Wasser, 30 Gew.-Teilen Propylenglykol, 30 Gew.-Teilen Glycerin, 1,4-Gew.-Teilen des gelben Fluoreszenzfarbstoffs der in Beispiel 4 angegebenen Formel und 2,0 Gew.-Teilen eines nichtionischen Emulgators (NP 10 der Bayer AG) gegeben, auf 90-95° C erwärmt und 4 Stunden lang bei dieser Temperatur gerührt.

Ähnliche Einfärbungen sind auch mit dem gelben Fluoreszenzfarbstoff der Formel

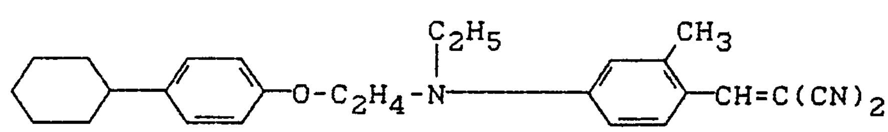

möglich.

Beispiel 6

Herstellung einer nichterfindungsgemäßen fluoreszierend eingefärbten Polymeremulsion (Vergleich)

200 Gew.-Teile des Latex aus Beispiel 3 werden mit 100 Gew.-Teilen Wasser versetzt, wonach ein Latex mit einem Polymerfeststoffgehalt von ca. 25 Gew.-% resultiert. Dazu wird unter Rühren eine Mischung aus 30 Gew.-Teilen Wasser, 50 Gew.-Teilen Ethylenglykol, 1,35 Gew.-Teilen Macrolex Fluoreszenzgelb 10 GN der Bayer AG, 0,5 Gew.-Teilen eines nichtionischen Emulgators (siehe Beispiel 4) und 1,5 Gew.-Teilen Natriumsalz von $C_{9-18}$-Alkylsulfonsäuren (siehe Beispiel 1) gegeben, auf 90°-95° C erwärmt und 4 Stunden lang bei dieser Temperatur gerührt.

Untersuchungen an den erhaltenen fluoreszierend eingefärbten Polymeremulsionen

A) Beurteilung der Stabilität der Emulsionen

Von den in den Beispielen 4 und 5 beschriebenen erfindungsgemäßen Polymeremulsionen sowie der in Beispiel 6 beschriebenen Vergleichs-Emulsion wurden direkt nach der Herstellung Proben zu jeweils 100 g Emulsion abgefüllt und nach unterschiedlich langen Zeiten über ein Filter mit einer Maschenweite von 100 µm filtriert, wonach die auf dem Filter zurückgebliebenen Mengen Feststoff getrocknet und ausgewogen wurden.

| Lagerzeit | auf dem Filter zurückgebliebener Feststoff (g) Emulsion aus Beispiel 4 | Emulsion aus Beispiel 5 | Emulsion aus Beispiel (6) (Vergleich) |
|---|---|---|---|
| 1 Tag | - | - | - |
| 1 Woche | - | 0,01 | 0,08 |
| 4 Wochen | 0,01 | 0,02 | 0,24 |

B) Beurteilung der Fluoreszenz der Emulsionen nach unterschiedlich langer Lagerzeit

Unter Verwendung der in den Beispielen 4 und 5 beschriebenen erfindungsgemäßen Polymeremulsionen sowie der in Beispiel 6 beschriebenen Vergleichs-Emulsion wurden nach unterschiedlich langen Zeiten Striche auf Papier gezogen, wonach die jeweils resultierende Fluoreszenz visuell beurteilt wurde. Die Beurteilung erfolgte nach folgender Skala:

1: starke Fluoreszenz
2: mittlere Fluoreszenz
3: schwache Fluoreszenz
4: keine Fluoreszenz

| Lagerzeit | Beurteilung der Fluoreszenz gemäß obiger Skala Emulsion aus Beispiel 4 | Emulsion aus Beispiel 5 | Emulsion aus Beispiel 6 (Vergleich) |
|---|---|---|---|
| 1 Tag | 1 | 1 | 1 |
| 1 Woche | 1 | 1 | 2 |
| 4 Wochen | 1 | 1 | 3 |

Ähnliche Ergebnisse werden mit dem Farbstoff der Formel

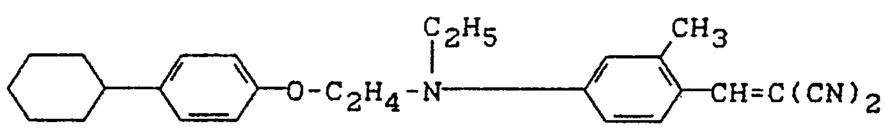

erhalten.

Beispiel 7

Herstellung einer fluoreszierenden Polymeremulsion

150 Gew.-Teile des Propfpolymerlatex aus Beispiel 1 werden mit 100 Gew.-Teilen Wasser versetzt und gemischt, wonach ein Latex mit einem Polymerfeststoffgehalt von ca. 25 Gew.-% resultiert. Zu diesem Latex wird unter Rühren eine Mischung aus 30 Gew.-Teilen Wasser, 50 Gew.-Teilen Glycerin, 1,0 Gew.-Teilen eines nichtionischen Emulgators vom Typ eines mit 19 Mol EO umgesetzten Oleylalkohols, 0,5 Gew.-Teilen eines nichtionischen Emulgators vom Typ eines mit 10 Mol EO umgesetzten Nonylphenols, 1,5 Gew.-Teilen Natriumsalz von $C_{9-18}$-Alkylsulfonsäuren und 1,35 Gew.-Teilen des gelben Fluoreszenzfarbstoffes der Formel

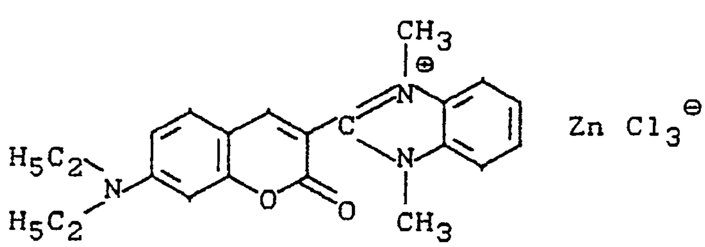

(Maxilon Flavin 10 GFF 300 % der Ciba Geigy)
gegeben, auf 90° C erwärmt und 2,5 Stunden lang bei dieser Temperatur gerührt.

Beispiel 8

Herstellung einer fluoreszierenden Polymeremulsion

Beispiel 7 wurde wiederholt, wobei statt des gelben Fluoreszenzfarbstoffes ein rotvioletter Farbstoff der Formel

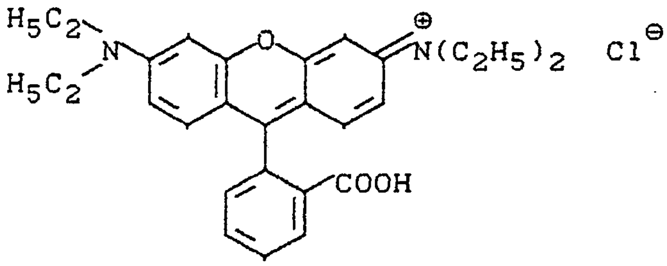

(Basonyl Rot 540 der BASF AG)
eingesetzt wurde. Es resultierte eine stabile fluoreszierende rotviolette Polymeremulsion.

Beispiel 9

Herstellung einer fluoreszierenden Polymeremulsion

Beispiel 7 wurde wiederholt, wobei ein anderer gelber Fluoreszenzfarbstoff der Formel

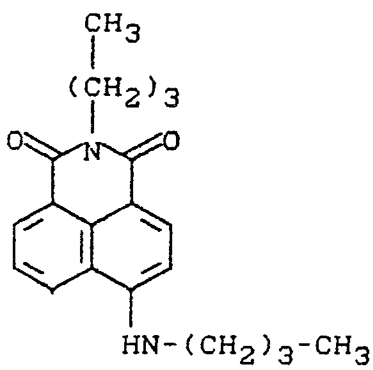

(Solvent Yellow 43 der Firma Holliday)
eingesetzt wurde. Es resultierte auch hier eine stabile fluoreszierende Polymeremulsion.

**Patentansprüche**

1. Fluoreszierend eingefärbte Polymeremulsionen enthaltend in der wäßrigen Phase dispergiert und/oder gelöst
   A) mindestens ein Pfropfpolymerisat,
   B) mindestens einen fluoreszierenden Farbstoff und gegebenenfalls
   C) mindestens ein mit Wasser mischbares organisches Lösungsmittel.

2. Fluoreszierend eingefärbte Polymeremulsionen gemäß Anspruch 1, dadurch gekennzeichnet, daß Komponente A) ein Pfropfpolymerisat von Styrol, Methylmethacrylat, Acrylnitril, Vinylacetat oder Mischungen daraus und Acrylsäure und/oder Methacrylsäure auf eine Pfropfgrundlage mit einer Glastemperatur ≦ 10° C ist.

3. Fluoreszierend eingefärbte Polymeremulsionen gemäß Anspruch 1, dadurch gekennzeichnet, daß die Propfgrundlage des Polymerisats A ein Dienkautschuk oder ein Acrylat-Kautschuk ist.

4. Fluoreszierend eingefärbte Polymeremulsionen gemäß Anspruch 1 bis 3, dadurch gekennzeichnet, daß als Pfropfpolymerisate A) Reaktionsprodukte von
   A1) 10-200 Gew.-Teilen Styrol, α-Methylstyrol, durch Cl oder $C_1$-$C_4$-Alkyl kernsubstituiertem Styrol, Methylmethacrylat, Acrylnitril, Methacrylnitril, N-$C_1$-$C_4$-Alkyl- oder N-Phenylsubstituiertem Maleinimid, Vinylacetat oder Mischungen daraus und/oder

A2) 1-20 Gew.-Teilen Acrylsäure, Methacrylsäure, Hydroxyethylacrylat, Hydroxyethylmethacrylat, Glycidylmethacrylat, Dimethylaminoethylacrylat, Dimethylaminoethylmethacrylat oder Mischungen daraus auf

A3) 1-50 Gew.-Teile einer Pfropfgrundlage mit einer Glastemperatur ≦ 10° C

erhalten sind.

**5.** Fluoreszierend eingefärbte Polymeremulsionen gemäß Anspruch 1, dadurch gekennzeichnet, daß als Komponente B) ein Farbstoff der Formel

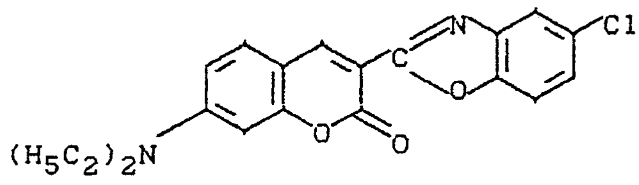

enthalten ist.

**6.** Fluoreszierend eingefärbte Polymeremulsionen gemäß Anspruch 1, dadurch gekennzeichnet, daß als Komponente B) ein Farbstoff der Formel

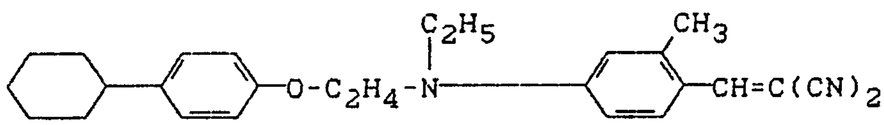

enthalten ist.

**7.** Verfahren zur Herstellung fluoreszierend eingefärbter Polymeremulsionen, dadurch gekennzeichnet, daß zu mindestens einem in wäßriger Emulsion vorliegenden Pfropfpolymerisat A) unter ständigem Rühren bei Temperaturen zwischen 20° C und 100° C mindestens ein fluoreszierender Farbstoff B) und gegebenenfalls mindestens ein mit Wasser mischbares organisches Lösungsmittel C) zugesetzt wird bis die Emulsion einheitlich gefärbt ist.

**8.** Verwendung der Polymeremulsionen gemäß Ansprüchen 1-6 zur Herstellung von sogenannten Markerstiften.

Europäisches Patentamt

# EUROPÄISCHER RECHERCHENBERICHT

Nummer der Anmeldung

**EP 90 12 4854**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| Y | EP-A-0 344 379 (NIPPON KEIKO KAGAKU COMPANY, LIMITED)<br>* Ansprüche *<br>- - - | 1,5-8 | C 08 K 5/00<br>C 08 L 51/00<br>C 09 D 11/16 |
| Y | US-A-4 059 554 (THOMAS JOHN PACANSKY)<br>* Ansprüche *<br>- - - - - | 1,5-8 | |
| | | | **RECHERCHIERTE SACHGEBIETE (Int. Cl.5)** |
| | | | C 08 K<br>C 08 L<br>C 09 D |

Der vorliegende Recherchenbericht wurde für alle Patentansprüche erstellt

| Recherchenort | Abschlußdatum der Recherche | Prüfer |
|---|---|---|
| Den Haag | 13 Juni 91 | DE LOS ARCOS Y VELAZ |

KATEGORIE DER GENANNTEN DOKUMENTE

X: von besonderer Bedeutung allein betrachtet
Y: von besonderer Bedeutung in Verbindung mit einer anderen Veröffentlichung derselben Kategorie
A: technologischer Hintergrund
O: nichtschriftliche Offenbarung
P: Zwischenliteratur
T: der Erfindung zugrunde liegende Theorien oder Grundsätze

E: älteres Patentdokument, das jedoch erst am oder nach dem Anmeldedatum veröffentlicht worden ist
D: in der Anmeldung angeführtes Dokument
L: aus anderen Gründen angeführtes Dokument

&: Mitglied der gleichen Patentfamilie, übereinstimmendes Dokument